# FASCICULE DE BREVET EUROPEEN

(11) **EP 2 620 638 B1**
(45) Date de publication et mention de la délivrance du brevet: **22.10.2014**
(21) Numéro de dépôt: 12290454.3
(22) Date de dépôt: 20.12.2012
(51) Int. Cl.: F03D 3/00, F03D 3/06

(54) **Aube de rotor de Darrieus vrillée et courbe**
Verdrehte und gekrümmte Leitschaufel eines Darrieus-Rotors
Twisted and curved Darrieus rotor blade

(30) Priorité: 16.01.2012 FR 1200124
(43) Date de publication de la demande: 31.07.2013
(73) Titulaire: Sarl Eolie, 92310 Sevres (FR)
(72) Inventeur: Hesnard, Renaud, 92310 Sevres (FR)

(56) Documents cités:
- WO-A2-2006/030190
- FR-A1- 2 768 187
- GB-A- 2 100 687
- GB-A- 2 165 008

## Description

L'invention concerne un dispositif constituant une aube de rotor de type Darrieus et permettant d'obtenir une géométrie d'aube variable lors de la mise en rotation du rotor.

Le document GB-A-2 165 008 décrit par exemple une aube pour turbine éolienne de type Darrieus.

Les turbines de type Darrieus sont pourvues d'aubes tournant autour d'un axe globalement orthogonal au plan du champ des vecteurs vitesse du flux du fluide. La vitesse des aubes en rotation est supérieure à celle du flux. Pour des vitesses de fluide de 10m/s, l'ordre de grandeur des vitesses d'aube est de 30m/s pour atteindre un rendement opportun. Cela implique des efforts centrifuges importants, qui peuvent atteindre plusieurs centaines de G, et agissant en flexion sur les aubes. La conception des aubes nécessite une grande résistance et une masse réduite, ce qui rend leur fabrication complexe.

Pour des raisons mécaniques, il est préférable de réaliser l'aube en forme de troposkine, forme permettant à l'aube de subir des efforts dont la composante principale est la traction lors de la mise en rotation du rotor. Cette forme présente l'inconvénient de faire fortement varier la distance de l'aube à l'arbre de rotation le long de l'aube. La vitesse relative au fluide de l'aube est variable le long de l'aube, ce qui rend le comportement aéraulique de l'aube non homogène le long de l'aube. Il en découle des zones de décrochement de l'aube, des turbulences, du bruit et des pertes de rendement.

Pour des raisons aérodynamiques, la distance de l'arbre de rotation à l'aube doit préférablement être maintenue constante le long de l'aube, par exemple en montant des aubes rectilignes parallèles à l'axe de rotation de la turbine et réparties régulièrement autour de l'axe. Les rotors ainsi réalisés ont l'inconvénient de subir des variations de couple et d'effort important lorsque les aubes coupent le flux du fluide. Il en résulte des problèmes vibratoires et mécaniques.

Afin de limiter ces vibrations, certains constructeurs réalisent des aubes vrillées autour de l'axe du rotor. Cette forme permet de conserver une distance de l'aube à l'axe de rotation globalement constante, et donc un comportement aérodynamique identique de tous les points de l'aube, tout en lissant les efforts mécaniques engendrés par la portance et la traînée des aubes lors de la rotation du rotor. La forme résultante de ce vrillage d'aube sur un axe éloigné de l'enveloppe de l'aube est une forme à la fois de cintrage de l'aube selon une forme d'arc d'ellipse, et de vrillage de l'aube autour du chemin décrit par l'arc de cintrage.

Cette forme courbe et d'aube vrillée et cintrée, combinée aux besoins de légèreté et de résistance, réduisent le champ des procédés de fabrication industrialisable en production reproductible. Les solutions existantes consistent à former des aubes en matériau composite moulé, ou à cintrer des profilés aluminium, ou à maintenir un extrudé vrillé. Ces différentes techniques présentent des problématiques respectivement industrielles, de tenue mécanique, ou d'effort de précontraintes dans la structure.

La présente invention présente une architecture d'aube de rotor de type Darrieus.

L'aube est constituée d'une part d'une âme rectiligne et d'autre part, l'aube est constituée d'un habillage de forme aérodynamique recherchée. L'habillage aérodynamique est monté sur l'âme. L'aube est montée sur au moins deux supports décalés d'un angle α par rapport à l'axe de rotation. Sous l'effet de la force centrifuge due à la rotation du rotor, l'aube présentera une flèche, permettant ainsi de réaliser la courbure de l'aube à partir de l'âme rectiligne, et d'obtenir la forme proche de l'arc d'ellipse recherché.

En d'autres termes, l'aube comporte une âme cylindrique au repos qui est recouverte d'un habillage enveloppant adapté à conférer à l'aube une surface aérodynamique externe. L'aube est élastiquement déformable de sorte à pouvoir fléchir pour adopter une forme courbe sous l'effet de l'accélération centrifuge alors qu'elle tourne avec la turbine sur laquelle elle est montée en étant maintenue par ses extrémités.

L'habillage est vrillé autour d'un axe de vrillage inclus dans enveloppe de l'aube. La forme de l'aube correspond à l'enveloppe générée par la translation d'une section orthogonalement au plan de la section, cumulée avec une rotation de cette section dans son plan et autour d'un axe de vrillage traversant la dite section.

Lorsque l'aube est montée sur le rotor, ses extrémités sont distantes l'une de l'autre selon la direction de l'axe de rotation du rotor, et angulairement décalés autour de cet axe d'un angle α. Par sa raideur, l'aube fléchit lorsqu'elle est soumise à la force centrifuge due à la rotation du rotor, réalisant un arc. La variation de distance entre l'axe de rotation du rotor et l'aube le long de l'aube se réduit lors de la mise en rotation du rotor par l'effet de flexion de l'aube.

L'âme peut être en matériau composite et de type pultrudé, garantissant légèreté et résistance de façon industriellement reproductible.

En d'autres termes, l'âme peut être un tube en matériau composite obtenu par pultrusion.

L'âme peut être réalisée en matériau métallique obtenu par extrusion, comme un alliage d'aluminium.

L'habillage peut être de module d'Young suffisamment faible pour permettre le vrillage de l'aube le long de l'âme. Cette partie peut être en matériau thermoplastique amorphe obtenu par extrusion, permettant un vrillage par simple effet mécanique ou thermique, et garantissant une fabrication reproductible.

En d'autres termes, l'habillage peut être en matériau thermoplastique amorphe obtenu par extrusion.

L'habillage peut être fixé sur l'âme en ayant subi au préalable une torsion pour déformer l'habillage d'un état cylindrique à un état vrillé.

L'habillage peut être maintenu sur l'âme en position vrillée tout au long de l'âme, par collage.

En d'autres termes, l'habillage peut être maintenu de façon permanente en position vrillée sur l'âme par collage de l'habillage le long de l'âme.

L'habillage peut être maintenu de façon permanente en position vrillée sur l'âme par fixation de l'habillage sur l'âme à ses deux extrémités. La raideur en torsion de l'habillage est choisie entre 10 et 10.000 fois plus faible que celle de l'âme.

L'habillage peut être maintenu sur l'âme en position vrillée tout au long de l'âme, par insertion de mousse dans les espaces entre l'habillage et l'âme.

En d'autres termes, l'habillage peut être maintenu de façon permanente en position vrillée sur l'âme par apport de mousse entre l'âme et l'habillage. La mousse peut être coulée et expansée dans l'espace entre l'âme et l'habillage.

L'habillage peut être maintenu en une seule extrémité, le vrillage étant assuré par l'effet centrifuge sur l'habillage.

En d'autres termes l'habillage peut être fixé sur l'âme à une extrémité, le reste de l'habillage étant dans une configuration cylindrique au repos tout en étant libre de se tordre sous l'effet de l'accélération centrifuge pour adopter une configuration vrillée le long de l'âme.

L'aube est montée sur au moins deux supports décalés d'un angle α par rapport à l'axe de rotation.

En d'autres termes, l'aube est destinée à être montée sur un rotor de type Darrieus. Ce rotor est équipé de deux supports axialement décalés et munis de bras pour recevoir chacun une extrémité de l'aube les bras tenant une même aube étant angulairement décalés d'un angle α. L'angle est compris entre 1 et 180 degrés. Préférablement, l'angle α est compris entre 1 et 120 degrés. La distance des extrémités de l'aube à l'axe de rotation du rotor est sensiblement la même, à 20% près.

L'aube peut être maintenue sur les supports par l'intermédiaire de liaisons libres en rotation comportant chacune une partie mobile maintenue solidairement à une extrémité de l'âme de l'aube. Le maintien de l'âme sur la partie mobile est réalisé par un collage.

Les dessins annexés présentent l'invention :

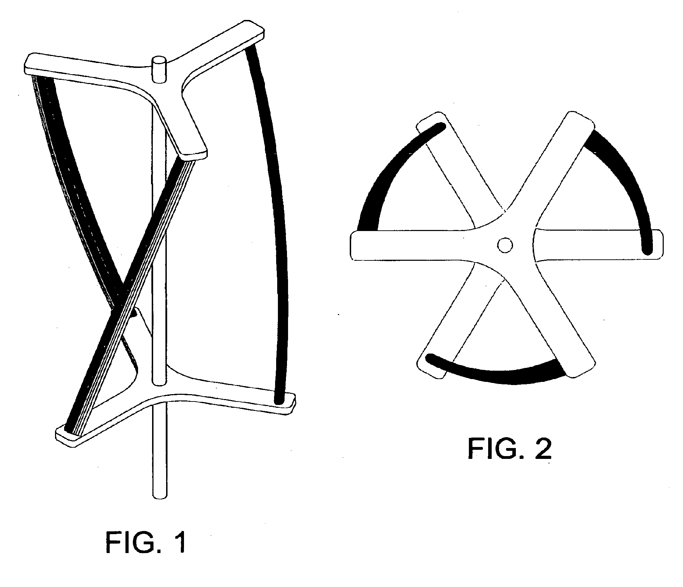

La figure 1 représente un rotor de type Darrieus à aubes en forme d'arc d'ellipse vrillé.
La figure 2 représente ce même rotor, vu de dessus

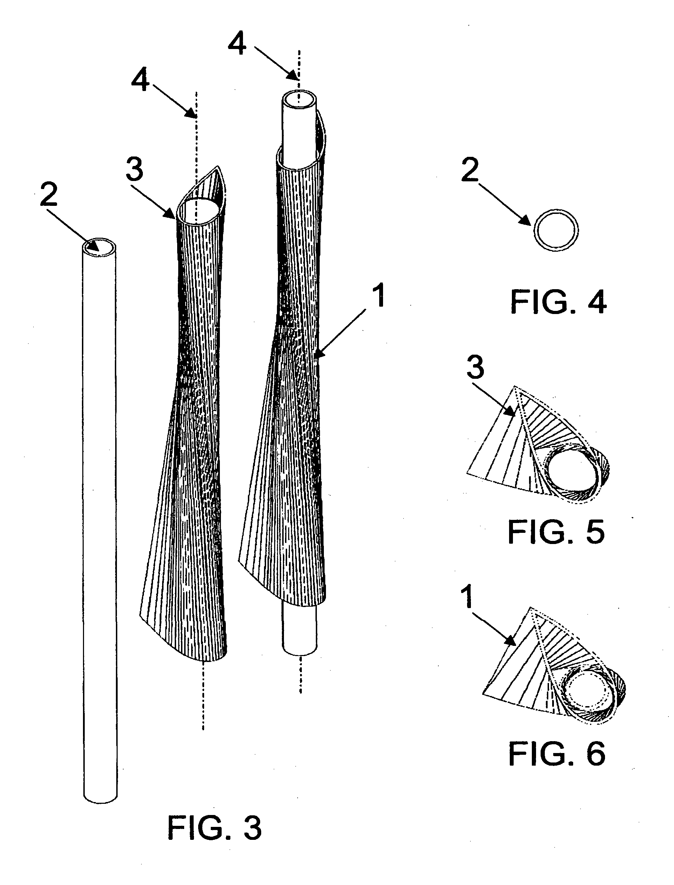

La figure 3 présente les éléments constitutifs de l'aube de rotor
La figure 4 représente une coupe de l'âme
La figure 5 représente une coupe de l'habillage de forme vrillé

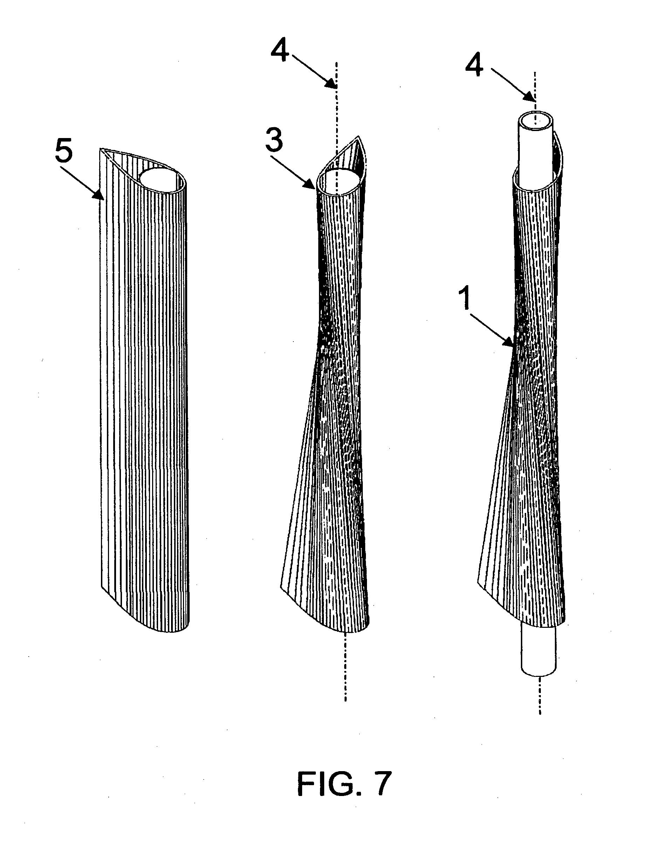

La figure 7 représente une solution de réalisation de l'habillage

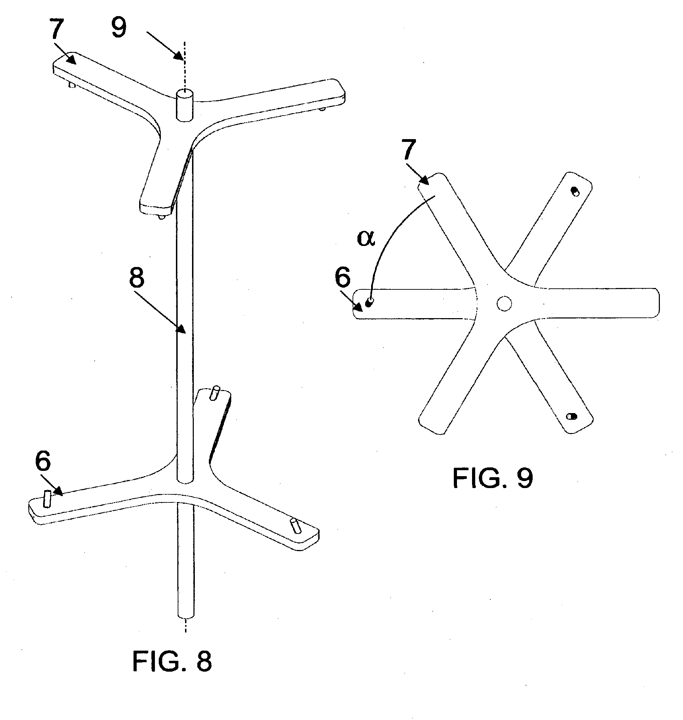

La figure 8 représente la structure de rotor
La figure 9 représente cette même structure vue de dessus

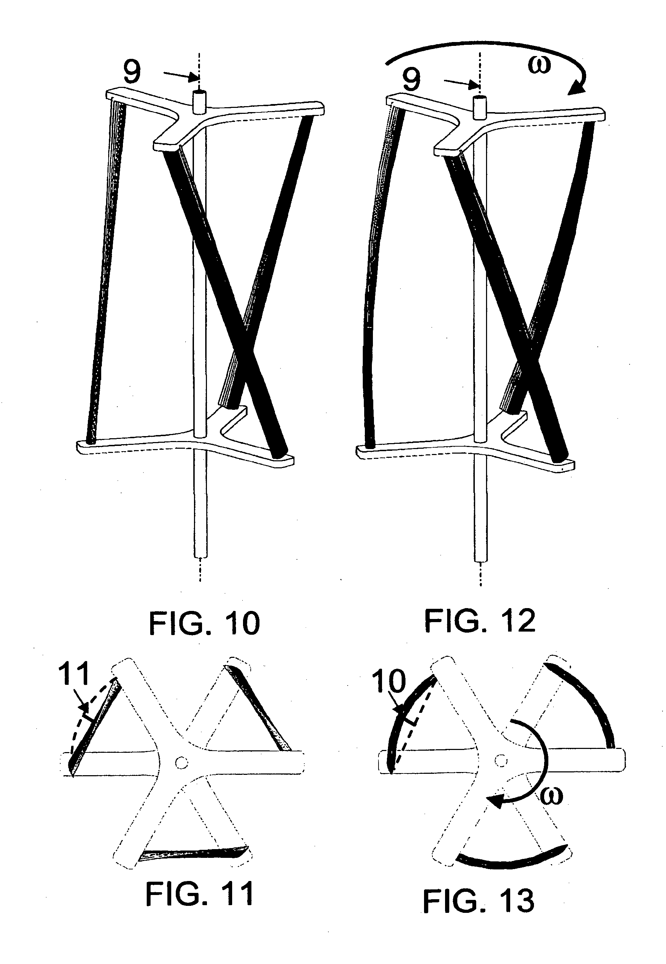

La figure 10 représente la forme du rotor à l'arrêt
La figure 11 représente ce même rotor à l'arrêt vu de dessus
La figure 12 représente la forme du rotor en rotation
La figure 13 représente ce même rotor en rotation vu de dessus

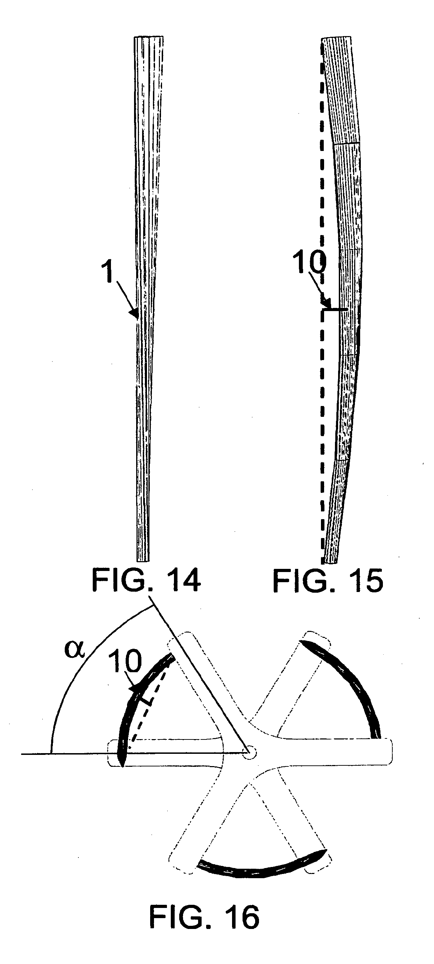

La figure 14 représente une aube statique
La figure 15 illustre la flèche de l'aube en rotation
La figure 16 illustre la réduction de variation de distance de l'aube à l'arbre du rotor
La figure 17 représente une mise en oeuvre du collage
La figure 18 représente cette mise en oeuvre vue de dessus
La figure 19 représente la mise en place définitive des éléments lors du collage
La figure 20 représente cette même mise en place définitive vue de dessus
La figure 21 représente une proposition de montage de l'habillage sur l'âme (par insertion de mousse).
La figure 22 représente une proposition de montage de l'habillage sur l'âme (par fixation en une seule extrémité).
La figure 23 représente cette même proposition vue de dessus
La figure 24 représente cette proposition de montage lors de la mise en rotation du rotor
La figure 25 représente ce même agencement en rotation vu de dessus.
La figure 26 représente une architecture d'assemblage de l'aube sur la structure de rotor

En référence à ces dessins, l'invention comporte une aube (1) de rotor de type Darrieus comportant une âme (2), un habillage (3) adapté à conférer à l'aube une surface aérodynamique. L'habillage est pourvu d'un fourreau permettant de placer l'âme dans l'habillage. L'habillage est vrillé sur un axe de vrillage (4) inclus dans l'aube, réalisant ainsi une forme vrillée.

L'âme (2) confère à l'aube ses propriétés mécaniques. L'âme (2) est préférablement en matière composite issue de pultrusion. L'inertie de l'âme doit lui permettre de résister aux efforts de torsions induits par les forces aérauliques, et de fléchir élastiquement sous l'effet des forces centrifuges dues à la rotation du rotor.

L'habillage (3) de l'aube est préférablement en matériau thermoplastique amorphe, issu d'extrusion plastique. Le vrillage de l'habillage étant réalisé par thermoformage de la forme cylindrique (5) issue d'extrusion.

Le rotor de type Darrieus est pourvu d'au moins une aube (1). Chaque aube est maintenue à l'arbre de la turbine par des bras (6,7) montés sur un arbre (8), axialement décalés le long de l'axe de rotation du rotor (9), et angulairement décalés par rapport à l'axe de rotation du rotor d'un un angle α compris entre 1 et 180 degrés. Préférablement, et afin de lisser les effets aérauliques le rotor est pourvu de 3 aubes réparties équitablement autour de l'axe, l'angle α est de 90°, les bras sont de taille identique.

Selon les dimensions du rotor, et pour la vitesse de rotation maximum du rotor, on privilégiera une section de l'âme permettant d'obtenir une flèche de l'aube (10), définie comme le plus grand déplacement de la fibre neutre de l'âme, de 20% de la longueur de l'aube environ.

En statique, l'aube est à une distance de l'arbre variant le long de l'axe de vrillage. L'amplitude de cette variation de distance (11) est compensée pour une vitesse de rotation donnée, par la flèche de l'aube (10) due à la flexion de l'aube sous l'effet de la force centrifuge induite par la rotation du rotor, et limitée par la raideur propre de l'aube.

La forme de l'aube soumise à son effort centrifuge prend la courbure proche de l'arc d'ellipse recherché. L'amplitude de variation de la distance entre l'aube et l'arbre de rotation est ainsi réduite, l'aube prend alors un comportement aéraulique homogène sur toute sa longueur.

Le rotor est un solide déformable sous l'effet des forces centrifuges de façon passive. Le dispositif ne nécessite pas d'actionneur pour changer la géométrie du rotor, ou pour maintenir un niveau de précontraintes dans ses constituants structurels.

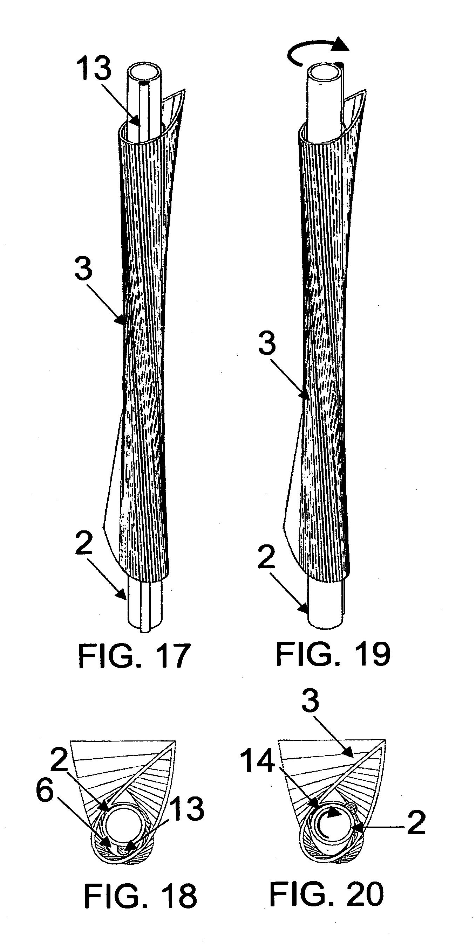

La fixation de l'habillage sur l'âme peut être obtenue par un collage comme présenté en figures 17 à 20. Afin de garantir un apport de colle maîtrisé tout au long du contact entre l'habillage et l'âme, l'habillage est pourvu d'une gorge (12) créant un espace continu entre l'âme (2) et l'habillage (3). La gorge (12) permet de ne pas altérer un cordon de colle (13) préalablement placé sur l'âme (2) lorsque l'âme est glissée dans l'habillage (3). Une rotation relative de l'habillage (3) et de l'âme (2) génère un film de colle (14) entre les deux éléments.

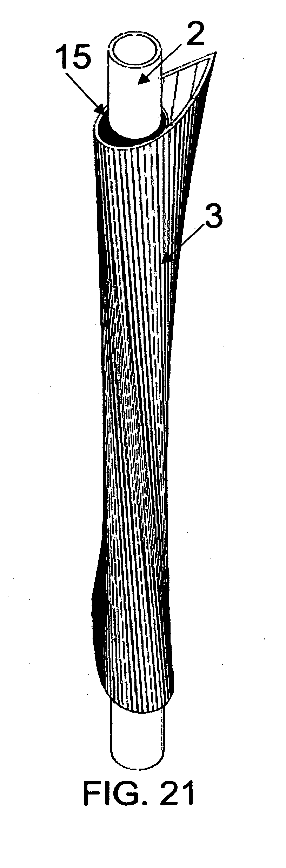

D'autres procédés de montage de l'aube sont envisageables, comme représenté en figure 21. Le collage est obtenu par insertion de mousse (15) entre l'âme et l'habillage, la mousse étant préalablement coulée dans l'espace libre, puis expansée par auto expansion. L'utilisation de mousse (15) pour coller l'âme (2) à l'habillage (3) permet de maintenir les deux composants solidaires en renforçant mécaniquement l'habillage contre les chocs.

Une variante permet de réaliser l'opération de mise en forme et de collage de l'habillage de façon simultanée. Le vrillage de l'habillage (3) sur un axe (4) inclus dans l'enveloppe de l'aube est obtenu par mise en contrainte de torsion d'une forme initialement cylindrique (5) et fixation dans cet état précontraint sur l'âme (2). Le vrillage de l'âme étant obtenu lors de l'opération d'assemblage des deux éléments.

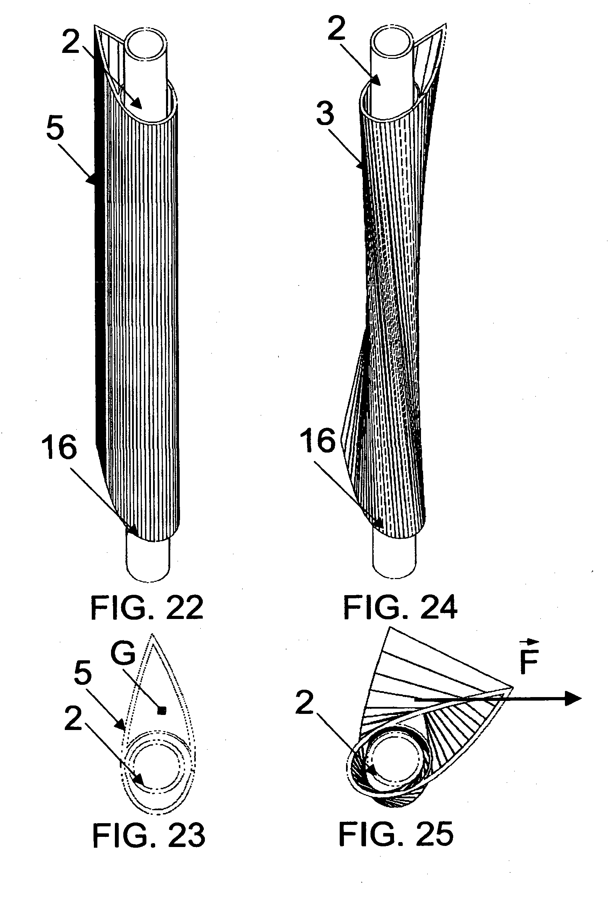

Une autre variante, présentée en figures 22 à 25 consiste à réaliser l'habillage (3) à partir d'une forme initialement cylindrique (5), fixée localement en une de ses extrémités (16), et à la laisser libre en torsion sur le reste de la longueur. Le vrillage de cette forme initialement cylindrique est obtenu par torsion de celle-ci sous l'effet du couple généré par l'effort centrifuge F̅ sur son centre de gravité, pour autant que celui-ci soit décalé par rapport au pivot constitué par l'âme (2).

Le couple induisant le vrillage peut aussi être appliqué par un actionneur.

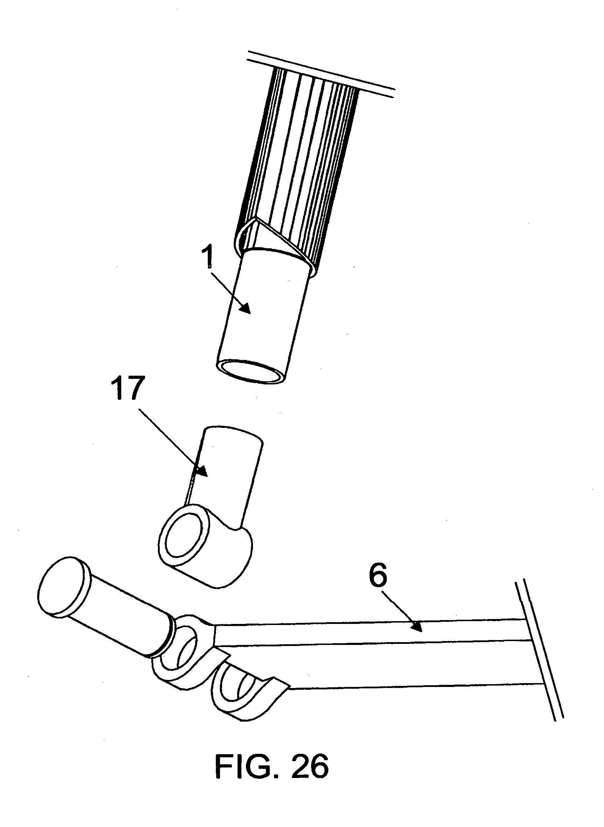

La figure 26 présente un mode de montage de l'aube sur les bras (5, 6). L'aube est maintenue sur les supports par l'intermédiaire de liaisons libres en rotation du type pivot dont une partie mobile (17) est maintenue solidairement à l'âme de l'aube par collage. Les procédés de fabrication des différents éléments sont préférentiellement la pultrusion composite pour l'âme (2), et de l'usinage de pièces métalliques pour la partie mobile (17) du pivot. Les jeux résultants et les matières impliquées se prêtent au collage structurel à base époxyde pour l'assemblage de l'âme et de la partie mobile du pivot.

Le dispositif selon l'invention est particulièrement adapté aux turbines de type Darrieus appliquées aux éoliennes.

## Revendications

1. Aube (1) pour turbine éolienne de type Darrieus, comportant une âme (2) cylindrique au repos qui est recouverte d'un habillage (3) enveloppant adapté à conférer à l'aube une surface aérodynamique externe, **caractérisé en ce que** l'aube est élastiquement déformable de sorte à pouvoir fléchir pour adopter une forme courbe sous l'effet de l'accélération centrifuge alors qu'elle tourne avec la turbine sur laquelle elle est montée en étant maintenue par ses extrémités, sa flexion étant limitée par une raideur propre de l'aube.

2. Aube (1) selon la revendication 1, dans laquelle l'âme (2) comprend un tube en matériau composite obtenu par extrusion.

3. Aube (1) selon la revendication 1, dans laquelle l'habillage (3) est en matériau thermoplastique amorphe obtenu par extrusion.

4. Aube (1) selon la revendication 1, dans laquelle l'habillage (3) est fixé sur l'âme (2) en ayant subi au préalable une torsion pour déformer l'habillage d'un état cylindrique à un état vrillé.

5. Aube (1) selon la revendication 1, dans laquelle l'habillage (3) est maintenu de façon permanente en position vrillée sur l'âme (2) par collage de l'habillage le long de l'âme.

6. Aube (1) selon la revendication 1, dans laquelle l'habillage (3) est maintenu de façon permanente en position vrillée sur l'âme par fixation de l'habillage sur l'âme à ses deux extrémités.

7. Aube (1) selon la revendication 1, dans laquelle l'habillage (3) est maintenu de façon permanente en position vrillée sur l'âme par apport de mousse (15) entre l'âme (2) et l'habillage (3).

8. Aube (1) selon la revendication 1, dans laquelle l'habillage (3) est fixé sur l'âme à une extrémité (16), le reste de l'habillage étant dans une configuration cylindrique au repos tout en étant libre de se tordre sous l'effet de l'accélération centrifuge pour adopter une configuration vrillée le long de l'âme.

9. Turbine de type Darrieus comportant un rotor équipé de deux supports (6, 7) axialement décalés et munis de bras pour recevoir chacun une extrémité d'une aube (1) selon l'une des revendications précédentes, les bras tenant une même aube étant angulairement décalés (α).

10. Turbine selon la revendication 9, dans laquelle l'aube (1) est maintenue sur les supports (6, 7) par l'intermédiaire de liaisons libres en rotation comportant chacune une partie mobile (17) maintenue solidairement à une extrémité de l'âme (2) de l'aube.

## Patentansprüche

1. Schaufel (1) für eine Windturbine vom Typ Darrieus, umfassend einen in Ruhestellung zylindrischen Kern (2), der mit einer umhüllenden Verkleidung (3) überzogen ist, die dazu geeignet ist, der Schaufel eine aerodynamische äußere Oberfläche zu verleihen, **dadurch gekennzeichnet, dass** die Schaufel derart elastisch verformbar ist, dass sie sich biegen kann, um unter der Wirkung der Zentrifugalbeschleunigung eine gebogene Form anzunehmen, während sie sich mit der Turbine dreht, an der sie montiert ist, indem sie mittels ihrer Enden gehalten wird, wobei die Biegung der Schaufel durch deren Eigensteifigkeit begrenzt ist.

2. Schaufel (1) nach Anspruch 1, wobei der Kern (2) ein Rohr aus einem Verbundwerkstoff umfasst, das mittels Extrusion hergestellt ist.

3. Schaufel (1) nach Anspruch 1, wobei die Verkleidung (3) aus einem amorphen thermoplastischen Material und mittels Extrusion hergestellt ist.

4. Schaufel (1) nach Anspruch 1, wobei die Verkleidung (3) an dem Kern (2) befestigt ist, indem sie zuvor einer Torsion unterzogen wurde, um die Verkleidung von einem zylindrischen Zustand in einen verdrehten Zustand umzuformen.

5. Schaufel (1) nach Anspruch 1, wobei die Verkleidung (3) durch Kleben der Verkleidung entlang des Kerns dauerhaft in verdrehter Position am Kern (2) gehalten wird.

6. Schaufel (1) nach Anspruch 1, wobei die Verkleidung (3) durch die Befestigung der Verkleidung an dem Kern an ihren beiden Enden dauerhaft in verdrehter Position am Kern gehalten wird.

7. Schaufel (1) nach Anspruch 1, wobei die Verkleidung (3) durch Schaumstoffzufuhr (15) zwischen dem Kern (2) und der Verkleidung (3) dauerhaft in verdrehter Position am Kern gehalten wird.

8. Schaufel (1) nach Anspruch 1, wobei die Verkleidung (3) an einem Ende (16) an dem Kern befestigt ist, wobei der Rest der Verkleidung in Ruhestellung in einer zylindrischen Konfiguration ist, während sie sich unter der Wirkung der Zentrifugalbeschleunigung frei verbiegen kann, um entlang des Kerns eine verdrehte Konfiguration anzunehmen.

9. Turbine vom Typ Darrieus, umfassend einen Rotor, der mit zwei Trägern (6, 7) ausgerüstet ist, die axial versetzt und mit Armen versehen sind, um jeweils ein Ende einer Schaufel (1) nach einem der vorhergehenden Ansprüche aufzunehmen, wobei die zu ein und derselben Schaufel gehörenden Arme in Winkelrichtung (α) versetzt sind.

10. Turbine nach Anspruch 9, wobei die Schaufel (1) an den Trägern (6, 7) durch frei drehbare Verbindungen gehalten wird, die jeweils einen beweglichen Teil (17) umfassen, der fest an einem Ende des Kerns (2) der Schaufel gehalten wird.

## Claims

1. A blade (1) for a Darrieus type wind turbine, the blade comprising a core (2) that is cylindrical at rest and that is covered in surrounding cladding (3) adapted to confer an outer aerodynamic surface on the blade, the blade being **characterized in that** it is elastically deformable so as to be capable of bending to adopt a curved shape under the effect of centrifugal acceleration when it rotates with the turbine on which it is mounted by being held by its ends, its bending being limited by stiffness specific to the blade.

2. A blade (1) according to claim 1, wherein the core (2) comprises a tube of composite material obtained by extrusion.

3. A blade (1) according to claim 1, wherein the cladding (3) is made of amorphous thermoplastic material obtained by extrusion.

4. A blade (1) according to claim 1, wherein the cladding (3) is fastened on the core (2) after previously being subjected to twisting in order to deform the cladding from a cylindrical state to a twisted state.

5. A blade (1) according to claim 1, wherein the cladding (3) is held permanently in the twisted position on the core (2) by adhesively bonding the cladding along the core.

6. A blade (1) according to claim 1, wherein the cladding (3) is held permanently in the twisted position on the core by fastening the cladding to the core at its two ends.

7. A blade (1) according to claim 1, wherein the cladding (3) is held permanently in the twisted position on the core by delivering foam (15) between the core (2) and the cladding (3).

8. A blade (1) according to claim 1, wherein the cladding (3) is fastened on the core at one end (16), the remainder of the cladding being in a cylindrical configuration at rest while being free to twist under the effect of centrifugal acceleration in order to adopt a twisted configuration along the core.

9. A Darrieus type turbine having a rotor fitted with two supports (6, 7) that are axially offset and that are provided with arms, each receiving one end of a blade (1) according to any preceding claim, the arms holding a given blade being angularly offset (α).

10. A turbine according to claim 9, wherein the blade (1) is held on the supports (6, 7) by means of connections that are free to rotate, each having a movable portion (17) securely held to one end of the core (2) of the blade.
